Europäisches Patentamt

European Patent Office

Office européen des brevets

(19)

(11) EP 1 679 655 A1

(12) **EUROPEAN PATENT APPLICATION**
published in accordance with Art. 158(3) EPC

(43) Date of publication:
12.07.2006 Bulletin 2006/28

(51) Int Cl.:
*G06T 7/00* (1995.01)

(21) Application number: 04792484.0

(22) Date of filing: 15.10.2004

(86) International application number:
PCT/JP2004/015267

(87) International publication number:
WO 2005/041128 (06.05.2005 Gazette 2005/18)

(84) Designated Contracting States:
DE FR GB

(30) Priority: 28.10.2003 JP 2003367210

(71) Applicant: SEIKO EPSON CORPORATION
Shinjuku-ku,
Tokyo 163-0811 (JP)

(72) Inventors:
• NAGAHASHI, Toshinori,
Seiko Epson Corporation
Suwa-shi, Nagano 3928502 (JP)
• HYUGA, Takashi,
Seiko Epson Corporation
Suwa-shi, Nagano 3928502 (JP)

(74) Representative: Hoffmann, Eckart
Bahnhofstrasse 103
82166 Gräfelfing (DE)

(54) **FACE IMAGE CANDIDATE AREA SEARCH METHOD, FACE IMAGE CANDIDATE AREA SEARCH SYSTEM, AND FACE IMAGE CANDIDATE AREA SEARCH PROGRAM**

(57) A method of the invention comprises the steps of sequentially selecting a predetermined area within the image G to be searched and then generating an image feature vector for the selection area, inputting the image feature vector into a support vector machine 30 which has learned beforehand the image feature vectors for a plurality of sample images for learning, and deciding whether or not a face image exists in the selection area based on a positional relation with a discrimination hyperplane. Thereby, it is possible to search an area where a face image exists with high possibility from the image G to be searched at high speed and precisely.

*F I G. 1*

EP 1 679 655 A1

**Description**

Technical Field

The present invention relates to a pattern recognition or object recognition technology, and more particularly to a face image candidate area searching method, system and program for searching an area considered to be face image where a person's face image exists with high possibility from an image at high speed.

Background Art

Along with the higher performance of the pattern recognition technology or information processing apparatus such as a computer in recent years, the recognition precision of characters or voices has been remarkably improved. However, it is well known that it is still an extremely difficult work to make the pattern recognition for an image having a figure, object or scenery reflected, for example, an image picked up by a digital camera, or particularly to discriminate whether or not a person's face is reflected in the image correctly and at high speed.

However, it is a very important theme to discriminate automatically and correctly whether or not a person's face is reflected in the image, or who the person is, using the computer, in making the establishment of a living body recognition technology, improved security, speedy criminal investigation, and faster arranging or searching operation of image data, and many proposals regarding this theme have been ever made.

For example, in JP9-50528A, for a certain input image, the presence or absence of a flesh color area is firstly decided, the flesh color area is made mosaic, the distance between the mosaic area and a person's face dictionary is calculated to decide the presence or absence of a person's face, and the person's face is segmented, whereby false extraction due to influence of the background is reduced, and the person' s face is automatically found from the image efficiently.

However, with the above prior art, the person's face is detected from the image, based on the "flesh color", in which the "flesh color" is varied in the color range due to influence of illumination, resulting in a problem that the contraction of area is not efficiently made due to the detection leak of face image or conversely the background. Generally, since the background occupies a larger area than the face image area within the image, it is important to make the contraction of area efficiently to detect the face image area at high speed.

Thus, this invention has been achieved to solve the above-mentioned problems, and it is an object of the invention to provide a new face image candidate area searching method, system and program for searching an area considered to be face image where a person' s face image exists with high possibility from the image at high speed and precisely.

DISCLOSURE OF THE INVENTION

In order to achieve the above object, the invention 1 provides a face image candidate area searching method for searching an area considered to be face image where a face image exists with high possibility from an image to be searched for which it is unknownwhether or not any face image is contained, the method comprising the steps of: sequentially selecting a predetermined area within the image to be searched and then generating an image feature vector for the selection area, inputting the image feature vector into a support vector machine which has learned beforehand the image feature vectors for a plurality of sample images for learning, and deciding whether or not a face image exists in the selection area based on a positional relation with a discrimination hyper-plane.

That is, the support vector machine is employed as the discrimination section of the image feature vector generated in this invention, thereby making it possible to search the area where a face image exists with high possibility from the image to be searched at high speed and precisely. The support vector machine (hereinafter abbreviated as "SVM") as used in the invention, which was proposed in a framework of statistical learning theory by V. Vapnik, AT&T in 1995, means a learning machine capable of acquiring a hyper-plane optimal for linearly separating all the input data of two classes, employing an index of margin, and is known as one of the superior learningmodels in the ability of pattern recognition, as will be described later in detail. In case that linear separation is impossible, high discrimination capability is exhibited, employing a kernel-trick technique.

The invention 2 provides the face image candidate area searching method according to the invention 1, wherein the image feature vector of the selection area is a non-face area partitioned by the discrimination hyper-plane for the support vector machine, and when the distance from the discrimination hyper-plane is greater than or equal to a predetermined threshold, it is decided that no face image exists in the selection image area.

That is, when the non-face area has the distance greater than or equal to the threshold, the decision whether or not the face image exists is omitted, considering that there is no possibility that the face area exists near the non-face area, whereby the area considered to be face image is searched at high speed.

The invention 3 provides the face image candidate area searching method according to the invention 1 or 2, wherein a discriminant function of the support vector machine is a non-linear kernel function.

That is, a fundamental structure of this support vector machine is a linear threshold element, but not applicable to the high-dimensional image feature vector that involves linearly inseparable data as a rule.

On the other hand, as a method for enabling the non-linear classification with this support vector machine, the dimension of the vector may be made higher. This involves mapping the original input data onto a high-dimensional feature space, and performing the linear separation on the feature space, so that the non-linear discrimination is performed in the original input space.

However, since an enormous time is required to acquire the non-linear map, the computation of this non-linear map is not actually made, but instead, the computation of a discriminant function or "kernel function" is made. This is called a kernel trick, making it possible to avoid directly computing the non-linear map, and overcome the computational difficulties.

Accordingly, if the discriminant function of the support vector machine for use in the invention employs the non-linear "kernel function", the high-dimensional image feature vector that essentially involves linearly inseparable data can be easily separated.

The invention 4 provides the face image candidate area searching method according to any one of inventions 1 to 3, wherein the image feature vector employs a corresponding value of each pixel reflecting a feature of face.

Thereby, any other object than the face image is not falsely discriminated as the face image, whereby it is possible to precisely discriminate whether or not the face image exists in each selection area to be discriminated.

The invention 5 provides the face image candidate area searching method according to any one of inventions 1 to 3, wherein the image feature vector is generated employing the value regarding the intensity of edge in each pixel, the variance of edge in each pixel, or the value of brightness in each pixel, or a combination of those values.

Thereby, it is possible to precisely discriminate whether or not the image in each selection area is the face image. The invention 6 provides the face image candidate area searching method according to invention 5, wherein the intensity of edge or the variance of edge in each pixel is generated employing a Sobel operator.

That is, this "Sobel operator" is one of the differential type edge detection operators for detecting a portion where density is abruptly changed, such as the edge or line in the image, and known as the optimal operator for detecting the contour of person's face in particular.

Accordingly, the image feature amount is generated by obtaining the intensity of edge or the variance of edge in each pixel, employing the "Sobel operator".

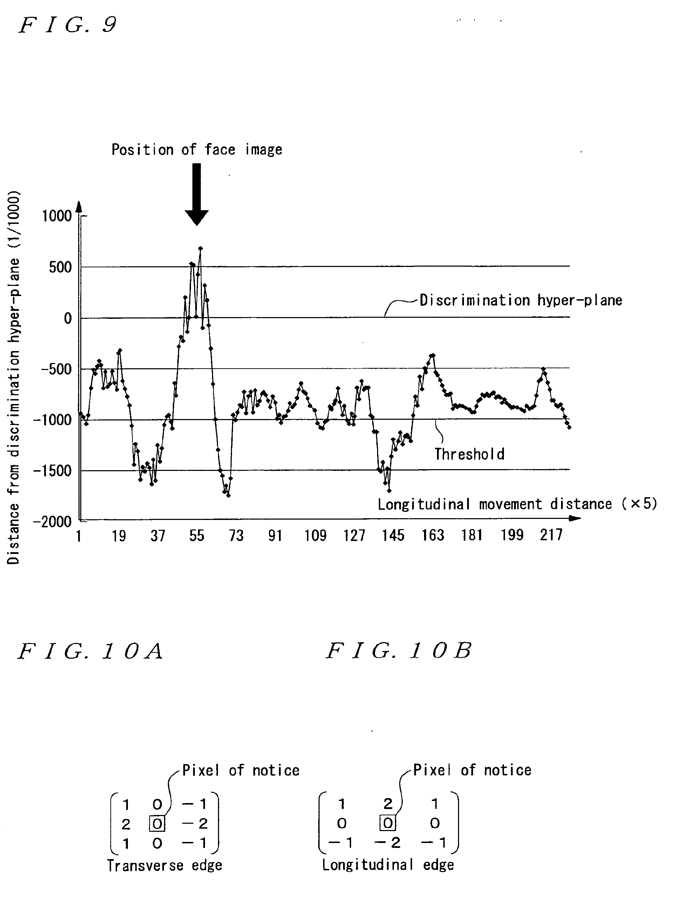

The configuration of this "Sobel operator" is shown in FIGS. 10A and 10B (a: transversal edge) and (b: longitudinal edge). The intensity of edge is calculated as the square root of a sum of the squared calculation result generated by each operator.

The invention 7 provides a face image candidate area searching system for searching an area considered to be face image where a face image exists with high possibility from an image to be searched for which it is unknown whether or not any face image is contained, the system comprising an image reading section for reading a selection area within the image to be searched and a sample image for learning, a feature vector generation section for generating the image feature vectors of the selection area within the image to be searched and the sample image for learning that are read by the image reading section, a support vector machine for acquiring a discrimination hyper-plane from the image feature vector of the sample image for learning that is generated by the feature vector generation means, and deciding whether or not a face image exists in the selection area based on a relation of the image feature vector of the selection area within the image to be searched that is generated by the feature vector generation section with the discrimination hyper-plane.

Thereby, it is possible to search the area where the person's face image exists with high possibility from the image to be searched at high speed and precisely as in the invention 1.

The invention 8 provides the face image candidate area searching system according to invention 7, wherein a discriminant function of the support vector machine is a non-linear kernel function.

Thereby, the high-dimensional image feature vector that involves the linearly inseparable data can be easily separated in the same way as in the invention 3.

The invention 9 provides a face image candidate area searching program for searching an area considered to be face image where a face image exists with high possibility from an image to be searched for which it is unknown whether or not any face image is contained, the program enabling a computer to perform an image reading step of reading a selection area within the image to be searched and a sample image for learning, a feature vector generation step of generating the image feature vectors of the selection area within the image to be searched and the sample image for learning that are read at the image reading step, a support vector machine for acquiring a discrimination hyper-plane from the image feature vector of the sample image for learning that is generated at the feature vector generation step, and deciding whether or not a face image exists in the selection area based on a relation of the image feature vector of the selection area within the image to be searched that is generated at the feature vector generation step with the discrimination hyper-plane.

Thereby, there is the same effect of the invention 1, and the functions are implemented on the software, employing a general-purpose computer such as a personal computer, more economically and easily than employing the specific hardware. Also, the functions are easily improved only by rewriting a part of the program.

The invention 10 provides the face image candidate area searching program according to invention 9, wherein a discriminant function of the support vector machine is a non-linear kernel function.

Thereby, there is the same effect of the invention 3, and the functions are implemented on the software, employing a general-purpose computer such as a personal computer, and produced more economically and easily than employing the specific hardware, like the invention 9.

BRIEF DESCRIPTION OF THE DRAWINGS

FIG. 1 is a block diagram showing a system for searching area considered to be face image according to one embodiment of the present invention;

FIG. 2 is a block diagram showing the hardware configuration for realizing the system for searching area considered to be face image;

FIG. 3 is a flowchart showing a method for searching area considered to be face image according to one embodiment of the invention;

FIG. 4 is a view showing an example of an image to be searched;

FIG. 5 is a view showing a state of selecting a selection area within the image to be searched by shifting it transversely;

FIG. 6 is a view showing a state of selecting a selection area within the image to be searched by shifting it longitudinally;

FIGS. 7A and 7B are views showing one example of a selection area table;

FIG. 8 is a graph showing the relationship between the distance from the discrimination hyper-plane and the transverse movement distance;

FIG. 9 is a graph showing the relationship between the distance from the discrimination hyper-plane and the longitudinal movement distance; and

FIGS. 10A and 10B are diagrams showing the configuration of a Sobel operator.

BEST MODE FOR CARRYING OUT THE INVENTION

The best mode for carrying out the present invention will bedescribedbelowwith reference to the accompanying drawings.

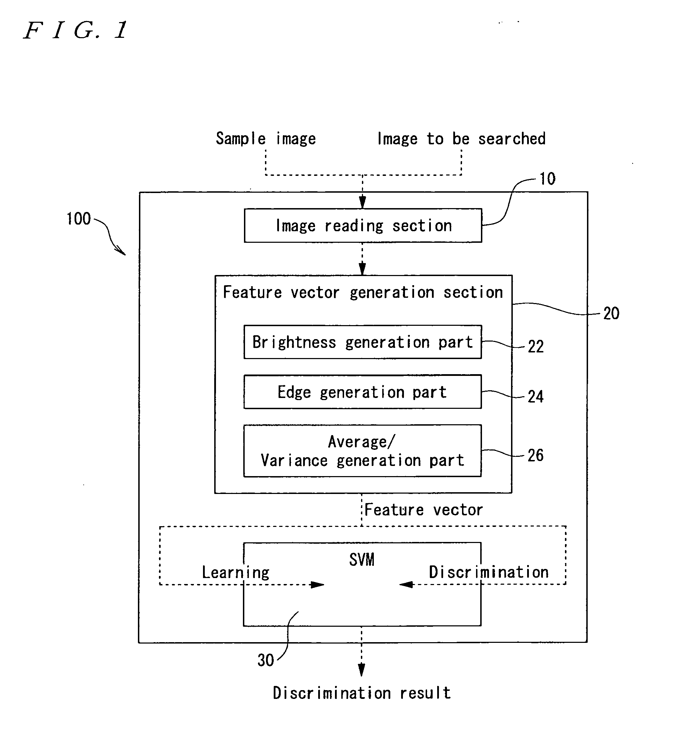

FIG. 1 is a block diagram showing a system 100 for searching area considered to be face image according to one embodiment of the present invention.

As illustrated in FIG. 1, the system 100 for searching area considered to be face image is mainly composed of an image reading section 10 for reading a sample image for learning and an image to be searched, a feature vector generation section 20 for generating a feature vector of an image read by this image reading section 10, and an SVM (support vector machine) 30 for discriminating whether or not the image to be searched is the area considered to be face image from the feature vector generated by the feature vector generation section 20.

Specifically, the image reading section 10 is aCCD (Charge Coupled Device) camera such as a digital still camera or a digital video camera, a vidicon camera, an image scanner or a drum scanner, and provides a function of making the A/D conversion for a predetermined area of the image to be searched and a plurality of face images and non-face images as the sample images for learning, which are read in, and sequentially sending the digital data to the feature vector generation section 20.

The feature vector generation section 20 further comprises a brightness generation part 22 for generating the brightness (Y) in the image, an edge generation part 24 for generating the intensity of edge in the image, and an average/ variance generation part 2 6 for generating the average of the intensity of edge generated by the edge generation part 24, the average of brightness generated by the brightness generation part 22, or the variance of the intensity of edge, and provides a function of generating the image feature vector for each of the sample images and the image to be searched from the pixel values sampled by the average/variance generationpart 26 and sequentially sending the generated image feature vector to the SVM 30.

The SVM 30 provides a function of learning the image feature vector for each of a plurality of face images and non-face images as the samples for learning generated by the feature vector generation section 20, and discriminating whether or not a predetermined area of the image to be searched generated by the feature vector generation section 20 is the area considered to be face image from the learned result.

This SVM 30 means a learning machine that can acquire a hyper-plane optimal for linearly separating all the input data, employing an index of margin, as previously described. It is well known that the SVM can exhibit a high discrimination capability, employing a technique of kernel trick, even in case that the linear separation is not possible.

And the SVM 30 as used in this embodiment is divided into two steps: 1. learning step, and 2. discrimination step. Firstly, at 1. learning step, after the image reading section 10 reads a number of face images and non-face images that are sample images for learning, the feature vector generation section 20 generates the feature vector of each image, in which the feature vector is learnedas an image feature vector, as shown in FIG. 1.

Thereafter, 2. discrimination step involves sequentially reading a predetermined selection area of the image to be searched, generating the image feature vector in the feature vector generation section 20, inputting the image feature vector as the feature vector, and discriminating whether or not the area contains the face image at high possibility, depending on which area the input image feature vector corresponds to on the discrimination hyper-plane. Herein, the size of the face image and non-face image as the sample for learning is identical to 20x20 pixels, for example, and the area of the same size is employed in detecting the face image.

Moreover, this SVM will be described below in more detail with reference to "Pattern Recognition and Statistics of Learning", written by Hideki Aso, Kouj i Tsuda and NoboruMurata, Iwanami Shoten, pp.107 to 118. When a discrimination problem is non-linear, the SVM can employ a non-linear kernel function, in which the discriminant function is given by the following formula 1.

That is, when the value of formula 1 is equal to "0", the discriminant function is a discrimination hyper-plane, or otherwise, the distance from the discrimination hyper-plane calculated from the given image feature vector. Also, the discriminant function represents the face image when the result of formula 1 is non-negative, or the non-face image when it is negative.

$$(\text{Formula } 1)$$

$$f((\phi(x)) = \sum_{i=1}^{n} \alpha i * y i * K(x, x i) + b$$

Where x and xi are the image feature vectors that take the values generated by the feature vector generation section 20. K is a kernel function, which is given by the following formula 2 in this embodiment.

$$(\text{Formula } 2)$$

$$K(x, x i) = (a * x * x i + b)^T$$
$$a = 1, b = 0, T = 2$$

The feature vector generation section 20, the SVM 30and the image reading section 10, which constitute the system 100 for searching area considered to be face image, is practically implemented on a computer system of personal computer (PC) or the like, comprising a hardware consisting of a CPU and RAM and a specific computer program (software).

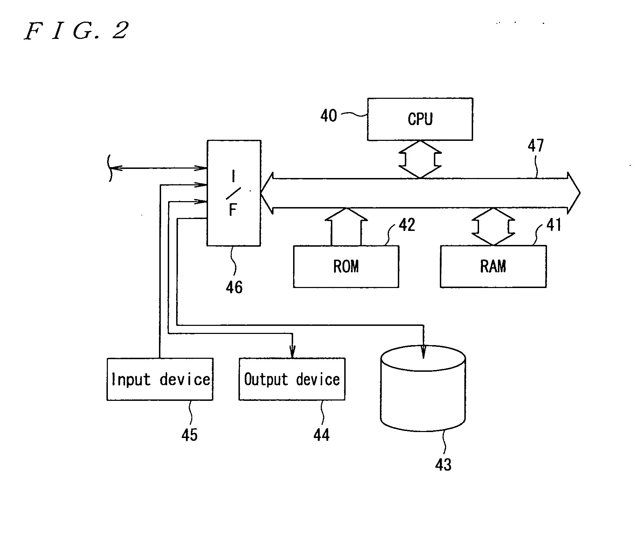

That is, the computer system for implementing the system 100 for searching area considered to be face image comprises a CPU (Central Processing Unit) 40 that is an arithmetic and program control unit for performing various controls and arithmetic operations, a RAM (Random Access Memory) 41 used for a main storage unit (Main Storage), a ROM (Read Only Memory) 42 that is a read-only storage, an auxiliary storage unit (Secondary Storage) 43 such as a hard disk drive (HDD) or a semiconductor memory, an output device 44 composed of a monitor (LCD (Liquid Crystal Display) or CRT (Cathode Ray Tube)), an input device 45 composed of an image scanner, a keyboard, a mouse, an image pickup sensor such as a CCD (Charge Coupled Device) or a CMOS (Complementary Metal Oxide Semiconductor), and an input/output interface (IF) 4 6, which are interconnected via various internal or external buses 47, including a processorbus such as a PCI (Peripheral Component Interconnect) bus and an ISA (Industrial Standard Architecture: ISA) bus, a memory bus, a system bus, and an input/output bus, as shown in FIG. 2.

And various kinds of control programs and data that are supplied via a storage medium such as CD-ROM, DVD-ROM, or a floppy (registered trademark) disk, or via a communication network N (LAN, WAN, internet, etc.) are installed in the auxiliary storage device 43, and loaded into the main storage device 41, as needed, whereby the CPU 40 employs various kinds of resources to perform a predetermined control and arithmetic operation in accordance with a loaded program, outputs the processed result (processed data) via the bus 47 to the output device 44 for display, and stores or updates the data in a database composed of the auxiliary storage device 43, as needed.

One example of the method for searching area considered to be face image employing the system 100 for searching area considered to be face image with the above configuration will be described below.

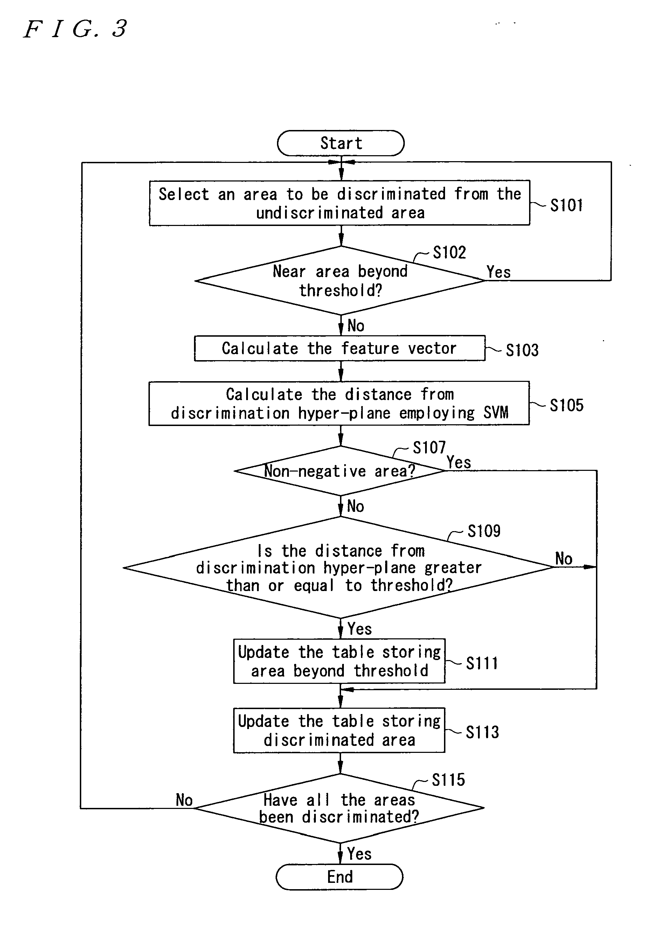

FIG. 3 is a flowchart actually showing one example of the method for searching area considered to be face image for the image to be searched. In making the actual discrimination, it is required to perform in advance a step of learning the face images and non-face images that are sample images for learning in the SVM 30 used for discrimination.

This learning step conventionally involves generating a feature vector for each of face images and non-face images that are sample images, and inputting the feature vector together with the information as to whether the image is face image or non-face image. When the image for learning to be learned in advance is larger than aprescribednumber of pixels, for example, "20x20", the image is resized into the size of "20x20", and then made mosaic in a block of "20x20" by the average/variance generation part 26 of the feature vector generation section 20 to acquire the feature vector.

And if the feature vector of sample image is learned for the SVM 30 in this way, a discrimination area within the image G to be searched is firstly selected at step S101 in FIG. 3.

At this time, not only at which position of the image G to be searched the face image is contained, but also whether or not the face image is contained are unknown, whereby the area is selected and searched thoroughly.

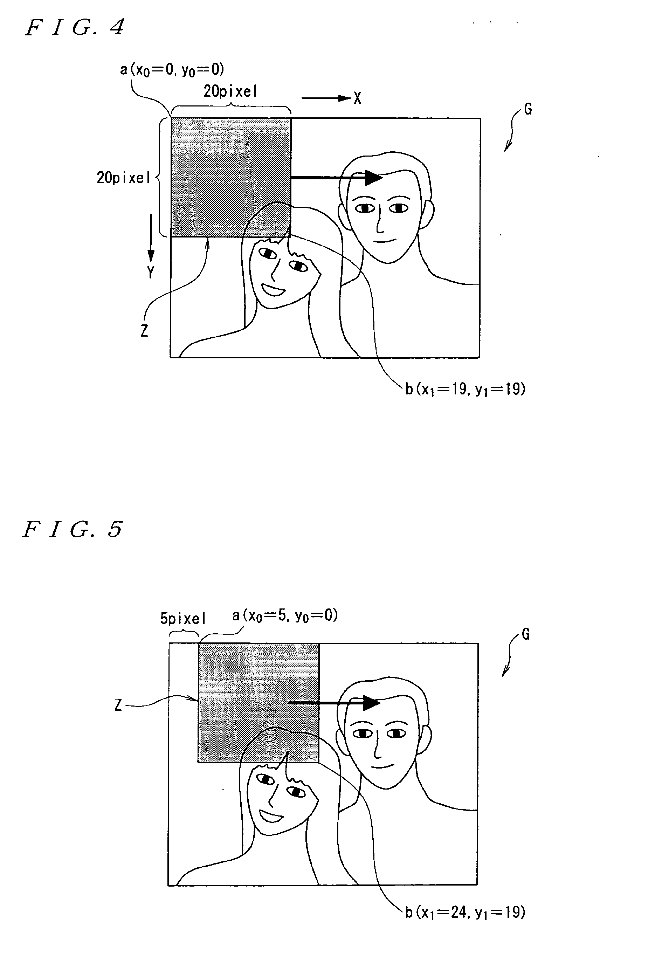

For example, when the image G to be searched is a photo of a young couple of man and woman, as shown in FIG. 4, the area to be selected at first is the first selection area Z ranging from a (x0=0, y0=0) to b (x1=19, y1=19), providing that the start point is a left upper corner of the image G to be searched, the transverse direction of the image G is x, and the longitudinal direction is y, and the selection area Z is a rectangular area having the size identical to the size of sample image, "20×20" pixels.

And if the first selection area Z for which the face image is searched is selected in this way, the operation transfers to the next step S102 to determine whether or not the first selection area Z is near the area beyond the threshold, as shown in FIG. 3. However, since the determination for the first area is impossible, the answer is "No", and the operation transfers to step S103 to calculate the image feature vector for the selection area Z. Thereafter, the operation transfers to step S105 to calculate the distance from the discrimination hyper-plane for the feature vector, employing the SVM 30. Then, it is judged whether or not the position of the feature vector is in the non-negative area (face area) partitioned by the discrimination hyper-plane of the SVM 30 (step S107).

At this judgement step S107, if it is judged that the feature vector exists in the non-negative area (Yes), the operation directly jumps to step S113, considering that the selection area Z is the face image existence area at very high possibility. On the other hand, if it is judged that the feature vector does not exist in the non-negative area, namely, the position of the feature vector exists in the negative area (non-face area) partitioned by the discrimination hyper-plane of the SVM 30 (No), the operation transfers to the next step S109 to judge whether or not the distance from the discrimination hyper-plane for the feature vector is greater than or equal to the threshold set up in the negative area.

That is, in this embodiment, when the calculated feature vector of the selection area Z is in the non-negative area, the selection area Z is naturally judged as the face area. However, even when the feature vector is in the negative area (non-face area) demarcated by the discrimination hyper-plane of the SVM 30, the selection area Z is not directly judged as the non-face area, but a threshold is provided in the negative area for the discrimination hyper-plane, and only when this threshold is exceeded, the selection area Z is judged as the non-face area.

Thereby, it is possible to prevent the false decision in which when the feature vector of the selection area Z demarcated by the discrimination hyper-plane exists in the negative area, the selection area Z is excluded, though the face image exists.

At step S111, the table storing the selection area Z where the distance from the discrimination hyper-plane is beyond the threshold is updated. Then, at step S113, the table storing all the discrimination areas, to say nothing of the selection area Z beyond the threshold, is updated.

Thereafter, if the update process for both the tables is ended, the operation transfers to step S115 to judge whether or not the discrimination process for all the selection areas Z is ended. If it is judged that the discrimination process for all the selection areas is ended (Yes), the procedure is ended. On the other hand, if it is judged that the discrimination process for all the selection areas is not ended (No), the operation returns to the first step S101, where the next discrimination area Z is selected. Then, at step S102, it is judged whether or not the selection area Z is near the area Z selected at the previous time and judged to exceed the threshold. If the answer is "Yes", the operation returns to the first step S101 by omitting the following steps for the area Z, where the next area Z is further selected, and the same procedure is repeated.

Thereby, the judgement process following the step S103 is omitted for the area having very low possibility that the face image exists, the face image area can be searched at higher speed.

For example, if the discrimination process for the first selection area Z (x0=0, x1=19, y0=0, y1=19) is ended, as shown in FIG. 4, then the area in which the selection area Z is moved "5" pixels in the transverse direction (x direction) for the image G to be searched is selected as the second selection area Z (x0=5, x1=24, y0=0, y1=19) (step S101), as shown in FIG. 5.

And the operation transfers directly to step S102 to judge whether or not the secondly selected area Z is near the area selected at the previous time (at first) and exceeding the threshold. If the answer is "Yes", the operation returns to the first step S101 by omitting the following steps for that area. At step S101, the area in which the image G to be searched is moved "5" pixels in the transverse direction (x direction) is selected as the third selection area (x0=10, x1=29, y0=0, yl=19) and the same procedure is repeated.

That is, when it is judged that the first selection area Z (x0=0, x1=19, y0=0, y1=19) is the area (with very low possibility that the face image exists) consequently exceeding the threshold in the subsequent judgement flow, the judgement process for the third selection area Z (x0=10, x1=29, y0=0, y1=19) is directly performed by omitting the following steps for the second area Z, considering that the second selection area Z (x0=5, x1=24, y0=0, y1=19) near the first selection area Z has lowpossibility that the face image exists. Thereby, since the wasteful process for the area (second selection area Z) having lowpossibility that the face image exists is omitted, the face image searching process is performed at higher speed.

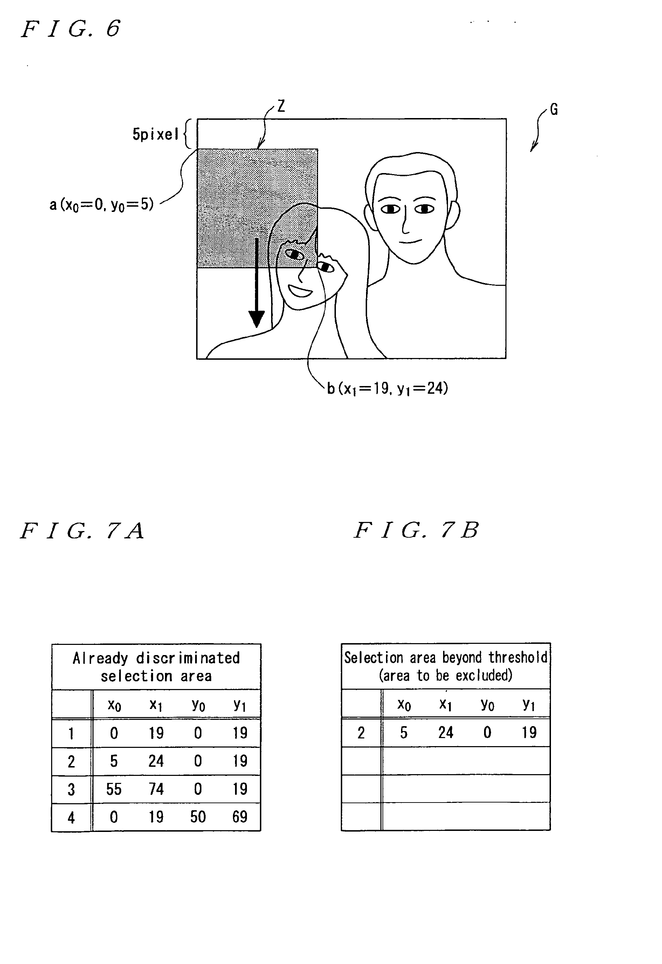

And if the selection of the area in the x direction for the transverse line at the top stage of the image G to be searched is ended, the area that is moved "5" pixels in the longitudinal direction (y direction) from the first selection area Z (x0=0, x1=19, y0=0, yl=19) is selected as the next selection area Z (x0=0, x1=19, y0=5, y1=24), as shown in FIG. 6. Then, the selection area Z is set as the next start point of the transverse line, and the same procedure is performed. Then, the area that is moved "5" pixels in the transverse direction (x direction) is selected, and the same procedure is repeated until the right end of the transverse line is reached. Moreover, the area is moved "5" pixels in the longitudinal direction (y direction) to the next transverse line, and the same procedure is sequentially repeated until the right lower area of the image G to be searched is reached.

Thereby, the judgement process for all the selection areas Z that are selected for the image G to be searched is performed.

FIG. 7A shows one example of the already discriminated selection area table as described at the step S113, and FIG. 7B shows one example of the discrimination selection area table storing the areas beyond the threshold as described at the step S111.

That is, in FIG. 7A, four selection areas (1, 2, 3 and 4) have been already discriminated. In FIG. 7B, among the four selection areas (1, 2, 3, 4), the second selection area (x0=5, x1=24, y0=0, y1=19) exceeds the threshold, namely, has very lowpossibility that the face image exists, and is excluded from the candidate.

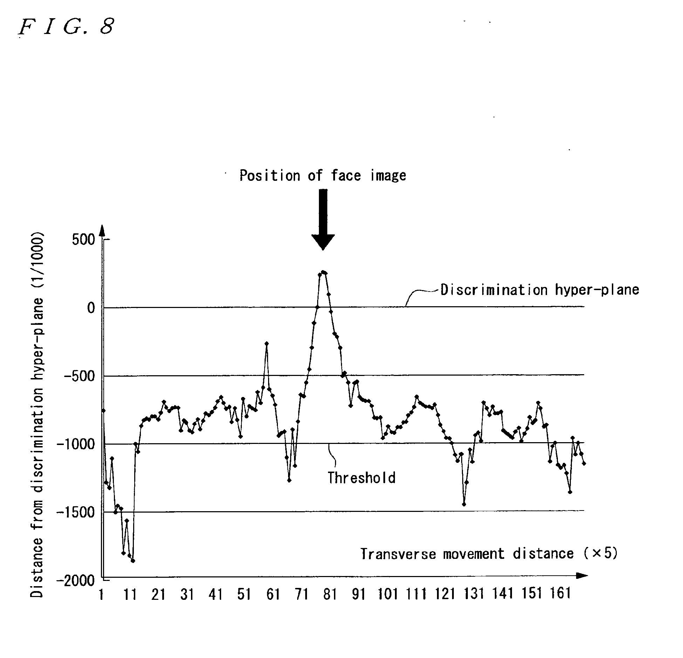

FIG. 8 shows one example of the distance (1/1000) from the discrimination hyper-plane for each selection area Z while moving the selection area Z in the transverse direction (x direction) within the image G to be searched, as shown in FIG. 5. In FIG. 8, the line of "0" indicates the discrimination hyper-plane, in which the upper area of the hyper-plane is the face image (non-negative area), and the lower area of the hyper-plane is the non-face area (negative area). Also, each plot point (black point) indicates the distance from the discrimination hyper-plane for each selection area. Also, in FIG. 8, the line of "-1" in the non-face area is the threshold. Also, the transverse axis represents the number of pixels, in which the actual number of pixels is five times the numerical value.

In FIG. 8, since only the area near the number of pixels from "71" to "81" exceeds the line of "0" that is the discrimination hyper-plane, it is judged that the area has the highest possibility that the face image exists in this example. On the other hand, the area near the number of pixels of "11" or less, the area near the number of pixels from "61" to "71", the area near the number of pixels from "121" to "131", and the area near the number of pixels of "161" greatly exceed (are below) the line of "-1" that is the threshold, it is judged that there is very small possibility that the face image exists near those areas.

Accordingly, in the example of FIG, 8, it is judged that the face image exists at high possibility in the other areas than the area near the number of pixels of "11" or less, the area near the number of pixels from "61" to "71", the area near the number of pixels from "121" to "131", and the area near the number of pixels of "161", namely, three areas, including 1. area having the number of pixels from "11" to "61", 2. area having the number of pixels from "71" to "121", and 3. area having the number of pixels from "131" to "161". And the order of possibility is easily decided such as from "area 2" to "area 1" to "area 3".

FIG. 9 shows one example of the distance (1/1000) from the discrimination hyper-plane for each selection area Z by moving the selection area Z in the longitudinal direction (y direction) within the image G to be searched, as shown in FIG. 6. In FIG. 9, like FIG. 8, the line of "0" indicates the discrimination hyper-plane, and the line of "-1" is the threshold. Also, the numerical value along the transverse axis represents five times the actual number of pixels.

In FIG. 9, since only the area near the number of pixels of "55" exceeds the line of "0" that is the discrimination hyper-plane, it is judged that the area has the highest possibility that the face image exists in this example. On the other hand, since the areas on both sides near the number of pixels of "55", and the area near the number of pixels of "145" greatly exceed (are below) the line of "-1" that is the threshold, it is judged that there is very small possibility that the face image exists near those areas.

Accordingly, in the example of FIG. 9, it is judged that the face image exists at high possibility in the other areas than the areas on both sides near the number of pixels of "55" and the area near the number of pixels of "145", namely, four areas, including 1. area near the number of pixels from "19", 2. area near the number of pixels of "55", 3. area near the number of pixels from "73" to "127", and 4. area near the number of pixels from "163" to "217". And the order of possibility is easily decided such as from "area 2" to "area 1" to "area 4" to "area 3".

Also, since it is judged that the area near the area for which it is judged that there is very low possibility that the face image exists beyond the threshold does not exceed the line of "0", and has small possibility that the face image exists, there is no problem by omitting the judgement process for the area near the area for which it is judged that there is very low possibility that the face image exists, as shown at step S102 in FIG. 3.

In the examples of FIGS. 8 and 9, the discrimination result may be changed between the area considered to be face image and the area considered to be non-face image in some places, but it will be found that no area near the pixels where the distance from the discrimination hyper-plane is larger in the area considered to be non-face image is decided as the face image.

Also, when the threshold regarding the distance from the discrimination hyper-plane is "-1" as above, the distance of pixel near the area where the face image does not appear can be "50" pixels.

Since the threshold and the distance of pixel regarded as neighborhood depend on the sample image for learning, test image and the details of the kernel function, they may be appropriately changed.

In this way, the distance from the discrimination hyper-plane is calculated for each selection area Z, employing the support vector machine 30, whereby it is possible to search the area where the person's face image exists with high possibility from the image G to be searched fast and accurately.

Though the embodiment of the invention is aimed at the "person's face" that is very favorable to be searched, the invention is applicable to not only the "person's face" but also various objects, such as "person' s form", "animal' s face, pose", "vehicle such as car", "building", "plant" and "topography", with the method for calculating the distance from the discrimination hyper-plane for each selection area Z, employing the support vector machine.

FIGS. 10A and 10B show "Sobel operator" that is one of the differential edge detection operators applicable in this invention.

The operator (filter) as shown in FIG. 10A adjusts three pixel values located in each of the left and right columns among eight pixel values around the pixel of notice to emphasize the transverse edge. Also, the operator as shown in FIG. 10B adjusts three pixel values located in each of the upper and lower rows among eight pixel values around the pixel of notice to emphasize the longitudinal edge and detect the longitudinal and transverse edges.

The intensity of edge is calculated by taking a sum of squares of results generated by this operator and a square root of the sum, and the intensity of edge or the variance of edge in each pixel is generated, whereby the image feature vector is detected precisely. Other differential edge detection operators such as "Roberts" and "Prewitt", or a template edge detection operator may be applied, instead of this "Sobel operator".

## Claims

1. A face image candidate area searching method for searching an area considered to be face image where a face image exists with high possibility from an image to be searched for which it is unknownwhether or not any face image is contained, said method comprising the steps of:

   sequentially selecting a predetermined area within said image to be searched and then generating an image feature vector for said selection area;
   inputting said image feature vector into a support vector machine which has learned beforehand the image feature vectors for a plurality of sample images for learning; and
   deciding whether or not a face image exists in said selection area based on a positional relation with a discrimination hyper-plane.

2. The face image candidate area searching method according to claim 1, wherein said image feature vector of said selection area is a non-face area partitioned by the discrimination hyper-plane for said support vector machine, and when the distance from said discrimination hyper-plane is greater than or equal to a predetermined threshold, it is decided that no face image exists near said selection image area.

3. The face image candidate area searching method according to claim 1 or 2, wherein a discriminant function of said support vector machine is a non-linear kernel function.

4. The face image candidate area searching method according to any one of claims 1 to 3, wherein said image feature vector employs a corresponding value of each pixel reflecting a feature of face.

**5.** The face image candidate area searching method according to any one of claims 1 to 3, wherein said image feature vector is generated employing the value regarding the intensity of edge in each pixel, the variance of edge in each pixel, or the value of brightness in each pixel, or a combination of those values.

**6.** The face image candidate area searching method according to claim 5, wherein said intensity of edge or said variance of edge in each pixel is generated employing a Sobel operator.

**7.** A face image candidate area searching system for searching an area considered to be face image where a face image exists with high possibility from an image to be searched for which it is unknownwhether or not any face image is contained, said system comprising:

an image reading section for reading a selection area within said image to be searched and a sample image for learning;
a feature vector generation section for generating the image feature vectors of said selection area within said image to be searched and said sample image for learning that are read by said image reading section;
a support vector machine for acquiring a discrimination hyper-plane from the image feature vector of the sample image for learning that is generated by said feature vector generation section, and deciding whether or not a face image exists in said selection area based on a relation of the image feature vector of the selection area within said image to be searched that is generated by said feature vector generation section with said discrimination hyper-plane.

**8.** The face image candidate area searching system according to claim 7, wherein a discriminant function of said support vector machine is a non-linear kernel function.

**9.** A face image candidate area searching program for searching an area considered to be face image where a face image exists with high possibility from an image to be searched for which it is unknown whether or not any face image is contained, said program enabling a computer to perform:

an image reading step of reading a selection area within said image to be searched and a sample image for learning;
a feature vector generation step of generating the image feature vectors of said selection area within said image to be searched and said sample image for learning that are read at said image reading step;
a support vector machine for acquiring a discrimination hyper-plane from the image feature vector of the sample image for learning that is generated at said feature vector generation step, and deciding whether or not a face image exists in said selection area based on a relation of the image feature vector of the selection area within said image to be searched that is generated at said feature vector generation step with said discrimination hyper-plane.

**10.** The face image candidate area searching program according to claim 9, wherein a discriminant function of said support vector machine is a non-linear kernel function.

*F I G. 1*

Sample image          Image to be searched

100

Image reading section — 10

Feature vector generation section — 20

Brightness generation part — 22

Edge generation part — 24

Average/
Variance generation part — 26

Feature vector

SVM

Learning          Discrimination

30

Discrimination result

*F I G. 2*

*F I G. 3*

```
                    ┌─────────────┐
                    │    Start    │
                    └──────┬──────┘
                           ↓
    ┌──────────────────────────────────────────┐
    │ Select an area to be discriminated from the │─ S101
    │           undiscriminated area             │
    └──────────────────┬───────────────────────┘
                       ↓           ┌ S102
                  ╱─────────────╲      Yes
                 ╱  Near area beyond ╲───────→
                 ╲   threshold?     ╱
                  ╲───────────────╱
                       │ No
                       ↓
    ┌──────────────────────────────┐
    │   Calculate the feature vector  │─ S103
    └──────────────┬───────────────┘
                   ↓
    ┌──────────────────────────────────────┐
    │      Calculate the distance from       │─ S105
    │ discrimination hyper-plane employing SVM │
    └──────────────┬───────────────────────┘
                   ↓          ┌ S107
              ╱──────────────╲  Yes
             ╱ Non-negative area? ╲──────→
              ╲──────────────╱
                   │ No
                   ↓                    ┌ S109
          ╱───────────────────────────╲
         ╱     Is the distance from     ╲    No
         ╲ discrimination hyper-plane greater ╲──────→
          ╲  than or equal to threshold?  ╱
           ╲───────────────────────────╱
                   │ Yes
                   ↓
    ┌──────────────────────────┐
    │  Update the table storing  │─ S111
    │    area beyond threshold   │
    └──────────────┬───────────┘
                   ↓
    ┌──────────────────────────┐
    │  Update the table storing  │─ S113
    │     discriminated area     │
    └──────────────┬───────────┘
                   ↓               ┌ S115
    No      ╱──────────────────╲
    ←───────╲  Have all the areas  ╱
            ╲  been discriminated? ╱
             ╲──────────────────╱
                   │ Yes
                   ↓
            ┌─────────────┐
            │     End      │
            └─────────────┘
```

*F I G. 4*

a($x_0=0$, $y_0=0$)

20pixel

→ X

20pixel

Y

Z

G

b($x_1=19$, $y_1=19$)

*F I G. 5*

5pixel    a($x_0=5$, $y_0=0$)

G

Z

b($x_1=24$, $y_1=19$)

*F I G. 6*

*F I G. 7A*

| Already discriminated selection area | | | | |
|---|---|---|---|---|
| | $x_0$ | $x_1$ | $y_0$ | $y_1$ |
| 1 | 0 | 19 | 0 | 19 |
| 2 | 5 | 24 | 0 | 19 |
| 3 | 55 | 74 | 0 | 19 |
| 4 | 0 | 19 | 50 | 69 |

*F I G. 7B*

| Selection area beyond threshold (area to be excluded) | | | | |
|---|---|---|---|---|
| | $x_0$ | $x_1$ | $y_0$ | $y_1$ |
| 2 | 5 | 24 | 0 | 19 |
| | | | | |
| | | | | |
| | | | | |

FIG. 8

Position of face image

Discrimination hyper-plane

Threshold

Transverse movement distance (×5)

Distance from discrimination hyper-plane (1/1000)

*F I G. 9*

Position of face image

Discrimination hyper-plane

Threshold

Distance from discrimination hyper-plane (1/1000)

Longitudinal movement distance (×5)

*F I G. 1 0 A*

*F I G. 1 0 B*

Pixel of notice

$$\begin{pmatrix} 1 & 0 & -1 \\ 2 & \boxed{0} & -2 \\ 1 & 0 & -1 \end{pmatrix}$$

Transverse edge

Pixel of notice

$$\begin{pmatrix} 1 & 2 & 1 \\ 0 & \boxed{0} & 0 \\ -1 & -2 & -1 \end{pmatrix}$$

Longitudinal edge

<table>
<tr><td colspan="2" align="center">**INTERNATIONAL SEARCH REPORT**</td><td>International application No.<br>PCT/JP2004/015267</td></tr>
</table>

| A. CLASSIFICATION OF SUBJECT MATTER |
| --- |
| Int.Cl⁷ G06T7/00 |

According to International Patent Classification (IPC) or to both national classification and IPC

| B. FIELDS SEARCHED |
| --- |

Minimum documentation searched (classification system followed by classification symbols)
Int.Cl⁷ G06T7/00

Documentation searched other than minimum documentation to the extent that such documents are included in the fields searched

| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 2002-157596 A (Sony Corp.),<br>31 May, 2002 (31.05.02),<br>Full text; Figs. 1 to 12<br>& WO 2002/41254 A1 & US 2003/059092 A1 | 1-10 |

☐ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>26 November, 2004 (26.11.04) | Date of mailing of the international search report<br>14 December, 2004 (14.12.04) |
| --- | --- |
| Name and mailing address of the ISA/<br>    Japanese Patent Office | Authorized officer |
| Facsimile No. | Telephone No. |

Form PCT/ISA/210 (second sheet) (January 2004)